# EUROPEAN PATENT APPLICATION

(11) **EP 3 264 232 A1**
(43) Date of publication of application: **03.01.2018**
(21) Application number: 17178973.8
(22) Date of filing: 30.06.2017
(51) Int. Cl.: G06F 3/0354, G06F 3/039

(54) **STYLUS ASSEMBLY**

(30) Priority: 30.06.2016 NL 2017076
(71) Applicant: Kreunen, Derk, 6952 HP Dieren (NL)
(72) Inventor: Kreunen, Derk, 6952 HP Dieren (NL)
(74) Representative: van Essen, Peter Augustinus

(57) **Abstract**

The invention provides a stylus assembly comprising a stylus and a holding part, said stylus having a tip end, a gripping part and a first coupling provision, said holding part comprising a second coupling provision that is complementary to said first coupling provision for allowing said stylus to be coupled to said holding part in a way to allow a used to decouple said stylus from said holding part, wherein said holding part provides an engagement surface engaging said stylus along at least part of its length, said first and second coupling provision provide coupling via magnetic attraction for holding said stylus on said holding part at said engagement surface, and said holding part further comprises a mechanical coupling provision for engaging said stylus for preventing rotation of said stylus and said holding part with respect to one another, wherein said stylus with said holding part provide at least part of a piece of jewellery.

## Description

### Field of the invention

The invention relates to a stylus assembly.

### Background of the invention

Currently, many mobile electronic devices like mobile phones, tablets and the like have a touch screen. There are many types of touch screens, many of these can be operated by means of a users finger, other require special styli. Many users prefer to use a stylus for many reasons. A stylus in general is disclosed in US2011261026.

A problem is that often, a stylus may be displaced, not available when needed or just lost.

KR100912433 according to its abstract discloses "A touch pen which is used when utilizing a panel and a touch screen is provided to reduce the length of the touch pen and use the touch pen conveniently since a loop is hung on the end part of the touch pen. Bars are comprised of three stages. The end part of each bar includes a hollow type cylinder shape. The loop of a touch pen is separated from a groove of a hooking part. A user pulls out the loop from the groove of the hooking part when the touch pen is used. A cap is combined in a bar in order to open the bar." This relates to a necklace having a pencil removably attached. The proposed pen is relatively complex.

KR20090066822 according to its abstract discloses "accessory mini ballpoint pen is provided to reduce the length of a ballpoint pen remarkably to 3-5 times of the cross section diameter of the ballpoint pen cylinder for the accessory effect." This requires a relatively complex structure.

In www.thewritingpenstore.com, many types of styli are offered, amongst which a stylus that is attached to a rope or to a keyring.

### Summary of the invention

It is an aspect of the invention to provide an alternative stylus assembly, which preferably further at least partly obviates one or more of above-described drawbacks.

Therefore, a stylus of claim 1 is provided.

Incorporating a stylus in a piece of jewellery, allows a stylus to be easily carried about and having a stylus available at any time and at any place, without any further manipulation.

Further embodiments of the stylus assembly are shown in the depending claims, and described in the description of embodiments.

The invention further provides a stylus assembly comprising a stylus and a holding part, said stylus having a tip end, a gripping part and a first coupling end having a coupling provision, said holding part comprising a second coupling provision that is complementary to said first coupling provision for allowing said stylus to be coupled to said holding part in a way to allow a used to decouple said stylus from said holding part, said holding part further comprising a third coupling provision, wherein said stylus with said holding part form part of a piece of jewellery, said third coupling providing a jewellery coupling.

This embodiment can be combined with specific embodiments of the dependent claims and this description.

When used, the term "substantially" herein, such as in in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

Furthermore, when used, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figure 1 schematically depicts an embodiment of the stylus assembly as a pendant on a necklace;
Figure 2 shows the stylus in use on a mobile phone;
Figure 3 shows the stylus assembly with the stylus detached from the holding part;
Figure 4 shows a cross section through part of a stylus assembly of figure 3;
Figure 5 shows an example of the stylus assembly with an alternative coupling provision;
Figure 6 shows an yet another example of the stylus assembly with an alternative coupling provision;
Figure 7 shows a cross section of an alternative embodiment of a stylus;
Figure 8 shows the stylus of figure 7 incorporated into a bracelet;
Figures 9 and 10 show the stylus of figure 7 incorporated into a tie-pin or tie-clip.

The drawings are not necessarily on scale

### Description of preferred embodiments

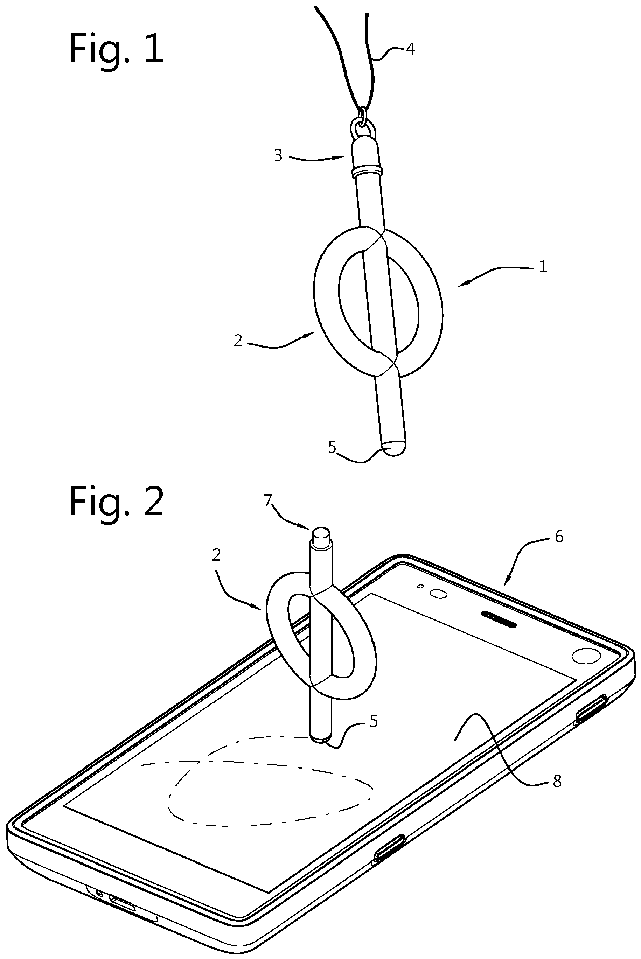

Figure 1 schematically depicts an embodiment of the stylus assembly 1 as a pendant on a necklace 4. The stylus assembly 1 has a stylus 2 and a holding part 3. In this embodiment, the stylus 2 has a conductive tip 5. This tip 5 may be from a conductive polymer material, for instance a conductive elastomeric material. In an embodiment, this tip 5 comprises a half-spherical balloon part.

Figure 2 shows the stylus 2 in use on a mobile phone 6 that is provided with a touch screen 8. The stylus is here detached from the holding part 3, showing a coupling provision 7. In this embodiment, the coupling provision 7 has a thinned end that fits in a corresponding hole or recess in holding part 3. The thinned end of the coupling provision 7 in this embodiment can comprise a ferromagnetic metal end that is able to be attracted by a magnet in the holding part 3, or alternatively it may comprise or consist of a permanent magnet part. The end needs not to be thinned, the holding part 3 can instead be enlarged. Alternatively, the holding part 3 can have an extended end and the stylus 2 can have an opening for receiving that extended end.

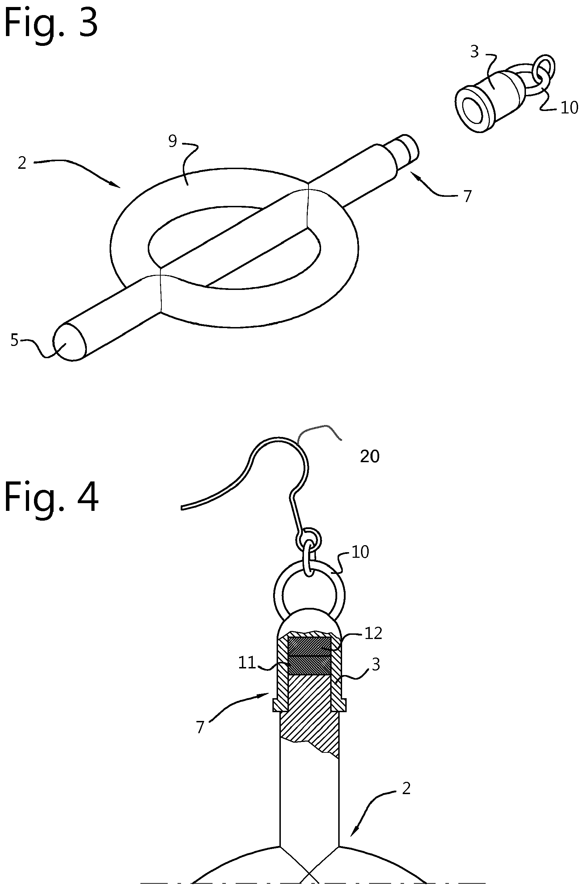

Figure 3 shows the stylus assembly 1 with the stylus 2 detached from the holding part3, in a position to be inserted (or just detached) from holding part 3. The holding part 3 has a third coupling provision 10, here a eye or link or ring. Via this ring, the holding part 3 and thus the stylus assembly 1 can be coupled as a piece of jewellery to for instance a necklace, a bracelet, a pin or other part of a broche, or to an earring, or it can be part of such a piece of jewellery. For instance, a pin or hook of an earring can be attached or form part of the holding part 3.

The stylus 2 here has an elongated end or stem holding the tip 5. Between that elongated end and the coupling provision 7, that can also be provided on an elongated stem as shown in the current embodiments, the stylus 2 in the current embodiment has a grip part 9 that in this embodiment has a widened part, here in the shape of a ring. Alternatively, the stylus 2 may have the shape of a cross, having its (shorter) upper part provided with the coupling provision 7. Other shapes and sizes of the stylus 2 are possible, although for use as a piece of jewellery, often the stylus is as small as possible, usually the distance between tip 5 and coupling provision 7 measures 3-6 cm. Often, the stylus has a thickness of between 1 and 4 mm. The widened part often has about that same thickness, and a width of 1-2 cm. The grip part 9 can have one or more end extending from the stylus 2, in particular from a stem of the stylus. In an embodiment, as shown, two opposite extending grip parts are provided. The grip part can have the shape of a logo or trademark. It may also comprise a small plate holding a name or a logo.

The stylus 2 can be partly or substantially made from a precious metal, like gold or silver, or be plated with that. Using a conductive outer layer, for instance a coating of that precious metal, increased its ease of use for certain types of touch screens.

Figure 4 shows a cross section through part of a stylus assembly 1 of figure 3. In this embodiment, the holding part 3 is provided with a permanent magnet 12, and the coupling provision of the stylus has a thinned part that fits in a recess or hole in the holding part 3 and is further provided with a permanent magnet 11. In order to set the holding force, a provision can be made to leave a small space between permanent magnets 11 and 12. For instance, the holding part 3 may be provided with a neck. It can also be possible to provide permanent magnet 11 recessed or flush-mounted in the stylus 2. It was found that in particular in combination with an earring coupling 20, the coupling using magnetic force has advantages as it requires little manipulation to remove the stylus part for use.

Alternatively, one of the permanent magnets can be replaced by a piece of ferromagnetic material, like iron, nickel, or a mixture of thereof, of a material provided with parts of such material. In an embodiment, the stylus 2 has such material, as it may be less desirable if the stylus is permanently magnetic.

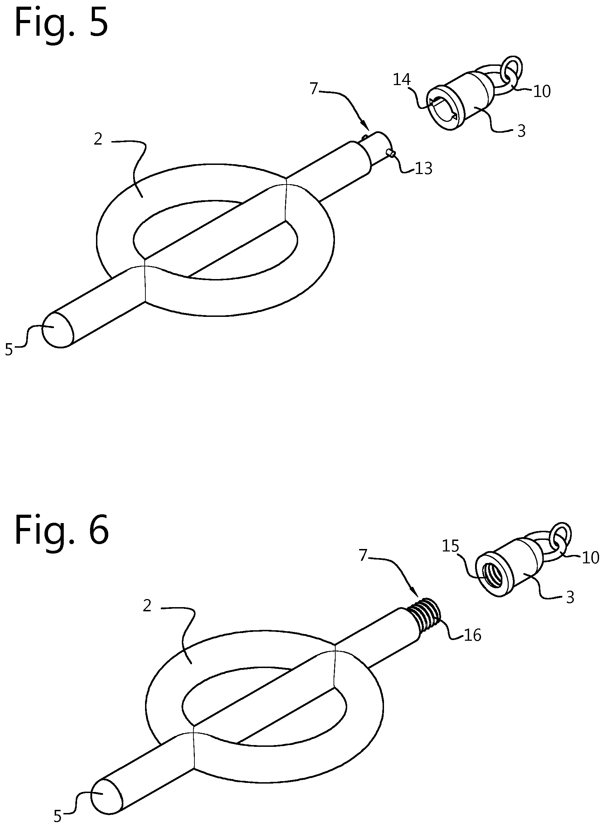

Figure 5 shows an example of the stylus assembly 1 with an alternative coupling provisions. Here, the stylus 2 and holding part 3 are provided with complementary bayonet coupling parts. Here, the stylus has in opposite direction extending pins 13 that fit into grooves 14. Usually, the groove 14 has a transverse end part that may spiral a little back in longitudinal direction, opposite the insert direction of the stylus 2. Using a (spring) biased insertion, the pins 13/grooves 14 bayonet may provide a solid coupling that provides an easy release of the stylus from the holding part 3.

Figure 6 shows an yet another example of the stylus assembly 1 with an alternative coupling provisions 15, 16. Here, a simple internal/external thread combination is used. The first coupling end of the stylus 2 is provided with an external thread 16, and the second coupling provision of the holding part 3 has a corresponding or complementary internal thread 15. This internal/external thread may be reversed, for making the stylus 2 more aesthetic.

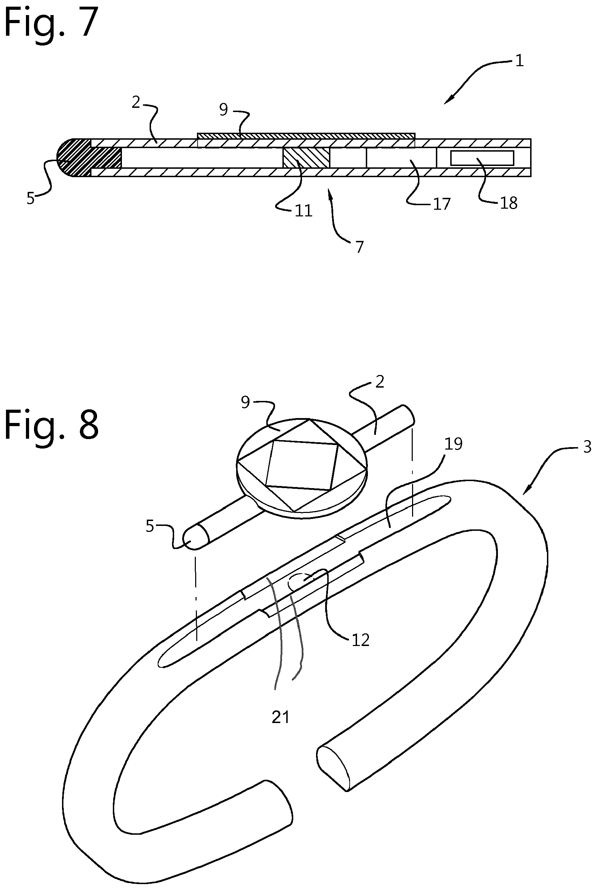

Figure 7 shows an embodiment of a stylus 2 in cross section. Here, the body of the stylus 2 comprises a tube 2 that is at one end provided with a tip 5 which can be conductive or from a material that is selected for not damaging or scratching the surface of a touch screen. The tube 2 in its hollow core is provided with a magnet or iron particle 11. The hollow core is here further provided with an electronic component 17, for instance an integrated circuit or RFID antenna. The electronic component 17 in an embodiment comprising a digital communication device. Such a communication device 17 is for instance passive, like the RFID antenna which just reflects a modified incoming signal. Alternative or in addition, the communication device 17 is active, like Bluetooth (BT), Wi-Fi, ZigBee, or the like. In this way, it is possible to communicate for instance settings to the device that includes the touch screen. The stylus 2 can further be provided with a power source 18, that can be rechargeable like a battery, for providing power to the electronic component 17.

In figure 8, a corresponding piece of jewellery 3, here a bracelet, is shown. The bracelet can be of any known type. The bracelet 3 can have a flexible part, and for instance have a ridged central part for holding the stylus 2. The complementary holding part 3 is here provided with a groove 19 for keeping the stylus 2 in its position on the complementary holding part 3, here preventing rotation. The groove 19 may even be shaped for snap-fitting at least part of the body or tube 2 of the stylus 2. For holding the stylus 2 onto the complementary holding part 3, the complementary holding part 3 may be provided with a magnet 12 positioned for working on the magnet 11 or iron part of the stylus 2. The groove 19 may comprise a hole at one end for sliding the tip of stylus 2 into for protection and providing more aesthetic design possibilities. Two abutment provisions 21 are provided, here two surfaces. Thes abutments can abut the grip part 9 for preventing rotation of the stylus 2, here about a longitudinal axis.

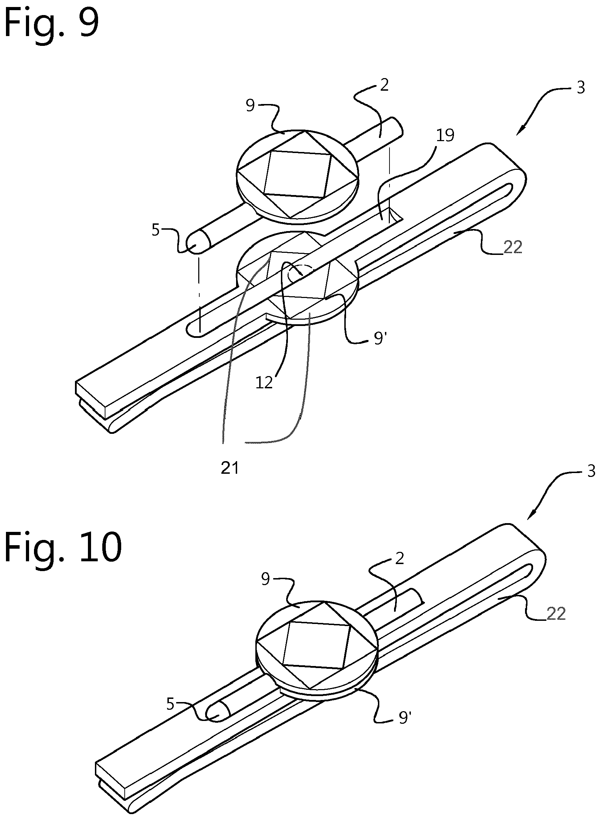

In figures 9 and 10, an alternative embodiment is depicted, integrating a stylus 2 into a tie-clip or tie-pin 3. Again, a groove 19 is provided for preventing the stylus 2 from rotating and getting detached from the complementary holding part 3. Here, the complementary holding part has a copy of the grip part 9. The grip part 9 can hold or be shaped as a logo. Thus, when the stylus 2 is in use, removal of the stylus 2 leaves the remaining piece of jewellery with complementary holding part 3 have a pleasing appearance. Furthermore, it may prevent accidental removal. The same complementary holding part 3 may also be used for the bracelet of figure 8. Alternative applications may comprise a pin having the complementary holding part 3. The complementary holding part in such an embodiment may be limited to the shape of the grip part 9 with a groove of other provision for preventing rotation of the stylus 2 with respect to the complementary holding part 3.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

## Claims

1. A stylus assembly (1) comprising a stylus (2) and a holding part (3), said stylus (2) having a tip end (5), a gripping part (9) and a first coupling provision (11), said holding part (3) comprising a second coupling provision (12) that is complementary to said first coupling provision for allowing said stylus (2) to be coupled to said holding part (3) in a way to allow a used to decouple said stylus (2) from said holding part (3), **characterised in that** said holding part (3) provides an engagement surface engaging said stylus (2) along at least part of its length, said first and second coupling provision (11, 12) provide coupling via magnetic attraction for holding said stylus on said holding part (3) at said engagement surface, and said holding part (3) further comprises a mechanical coupling provision (19) for engaging said stylus (2) for preventing rotation of said stylus (2) and said holding part (3) with respect to one another, wherein said stylus (2) with said holding part (3) provide at least part of a piece of jewellery.

2. The stylus assembly (1) of claim 1, wherein said holding part (3) comprises a third coupling (10), said third coupling providing a jewellery coupling.

3. The stylus assembly of claim 1 or 2, wherein said engagement surface and said mechanical coupling provision comprises a groove (19) for engaging at least part of said stylus (2), in particular said stylus (2) comprises a stem or tube end and said groove is provided for fittingly holding said stem or tube end.

4. The stylus assembly of claim 1, 2 or 3, wherein said mechanical coupling provision comprises an abutment for engaging at least part of said stylus (2) for preventing rotation about its longitudinal axis, in particular said stylus (2) comprises a stem or tube end with a gripping part (9) extending from said longitudinal axis, in particular extending to opposite sides of said longitudinal axis, and said mechanical abutment comprises an abutment for abutting said gripping part (9) at each side of gripping part (9).

5. The stylus assembly (1) of any one of the preceding claims, wherein said tip (5) is at one end of said gripping part (9), and said coupling end (7) is at an opposite end of said gripping part (9).

6. The stylus assembly of any one of the preceding claims, wherein said third coupling is selected from a broche coupling, an earring coupling, a bracelet coupling.

7. The stylus assembly of any one of the preceding claims, wherein said stylus comprises a conductive tip, in particular a conductive polymer tip, specifically a conductive elastomer tip.

8. The stylus assembly of any one of the preceding claims, wherein said conductive tip is a separately shaped part that has a receiving end for receiving an end of the stylus, in particular forming a cap that can be applied onto the stylus end.

9. The stylus assembly of any one of the preceding claims, wherein at least one of said coupling end (7) and said holding part (3) are provided with a permanent magnet (11, 12), and the respective other part is provided with a element (12, 11) that is attracted by said permanent magnet part (11, 12).

10. The stylus assembly of the preceding claim, wherein said third coupling is an earring coupling (20).
